(19) Europäisches Patentamt / European Patent Office / Office européen des brevets

(11) **EP 4 253 611 A1**

(12) **EUROPEAN PATENT APPLICATION**
published in accordance with Art. 153(4) EPC

(43) Date of publication:
**04.10.2023 Bulletin 2023/40**

(21) Application number: **21854688.5**

(22) Date of filing: **25.11.2021**

(51) International Patent Classification (IPC):
**D01D 5/04** *(2006.01)*   **D01F 6/70** *(2006.01)*

(52) Cooperative Patent Classification (CPC):
**D01F 6/70; D01D 5/04**

(86) International application number:
**PCT/IB2021/060973**

(87) International publication number:
**WO 2022/112993 (02.06.2022 Gazette 2022/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.11.2020   JP 2020194949**
**19.11.2021   JP 2021188459**

(71) Applicant: **Toray Opelontex Co., Ltd**
**Osaka 530-8222 (JP)**

(72) Inventors:
• **NAESHIRO, Kazuki**
**Otsushi, Shiga 520-8558 (JP)**
• **SUZUKI, Katsuya**
**Otsushi, Shiga 520-8558 (JP)**
• **TANAKA, Toshihiro**
**Otsushi, Shiga 520-8558 (JP)**

(74) Representative: **Carpmaels & Ransford LLP**
**One Southampton Row**
**London WC1B 5HA (GB)**

(54) **POLYURETHANE ELASTIC YARN**

(57)    [Problem]
To provide a polyurethane elastic fiber with excellent spinnability, stretchability, thermal adhesion, and unwinding properties, and a production method therefor.
[Solution]
A polyurethane elastic fiber having as a main component a polyurethane whose main starting materials are a polymer diol and a diisocyanate, wherein the polyurethane elastic fiber contains the three components in (a) through (c) below.
(a) A thermoplastic polyurethane elastomer
(b) A rosin and/or derivative thereof
(c) A cellulose ester and/or derivative thereof

EP 4 253 611 A1

**Description**

[Technical Field]

The present invention relates to a polyurethane elastic fiber that has high thermal adhesive strength in a wide temperature range and excellent unwinding properties while also maintaining stretchability (permanent deformation and elasticity).

[Background Art]

Because of their superior elastic properties, elastic fibers are used in a wide range of applications, including elastic clothing applications such as legwear, innerwear and sportswear, and industrial applications.

When elastic fibers are used in clothing, they are usually cross-woven and the resulting fabric is cut, sewn, and finished to obtain a product. Fabrics that are cross-woven using polyurethane elastic fiber tend to fray at the edges when cut and sewn, and the polyurethane elastic fibers come off the woven structure of the fabric along the frayed edges, leading to a loss of stretchability in those portions of the fabric.

In a typical product, some sort of trimming is performed to keep the cut edges from fraying. For example, a cut edge is often folded over and a double layer is sewn together, or the edge is wrapped with another type of cloth such as tape and sewn together. Post-treatment work to prevent fraying such as trimming and sewing takes time to perform in the production process for clothing products, and is a significant economic burden on producers. Clothing products that have been trimmed or sewn at the edges have thicker fabric along the edges, which creates unevenness. In the case of undergarments such as foundation garments, unevenness occurs when outerwear is worn over them, which spoils the appearance. Many clothing products using polyurethane elastic fiber are tight fitting, such as foundation garments and pantyhose, and the thicker edges feel less comfortable.

In order to solve the problem of having to sew the edges of clothing using polyurethane elastic fiber in the field of foundation garments such as brassieres, girdles and bodysuits, which have become more fashionable in recent years, production methods for garments have been studied which use so-called uncut openings without any cut or sewn edges in which undergarment lines do not appear under outerwear.

For example, clothing using fabrics that do not need to be cleaned up has been proposed. This clothing uses a warp-knitted fabric that does not require clean up, in which the knitting structure is a $1 \times 1$ knitting structure with inelastic fiber and elastic fiber, and at least the inelastic fiber or the elastic fiber is knitted with a closed stitch by each knitting needle (see Patent Document 1).

A garment with an uncut opening has also been proposed in which a low melting point polyurethane elastic fiber is used as a heat-sealing elastic fiber, and the other fiber is knitted by plating knitting and heat-set to obtain a knitted fabric with an anti-fray function (see Patent Document 2).

A polyurethane elastic fiber containing thermoplastic polyurethane as a heat-sealing elastic fiber has also been proposed (see Patent Document 3), in addition to polyurethane elastic fibers containing a heat-bonding component (see Patent Documents 4, 5).

[Patent Document 1] JP 2003-147618 A

[Patent Document 2] JP 2005-113349 A

[Patent Document 3] JP 2007-177359 A

[Patent Document 4] JP 2010-150676 A

[Patent Document 5] JP 2009-144267 A

[Summary of the Invention]

[Problem to Be Solved by the Invention]

In the case of the technique disclosed in Patent Document 1, while the design of the fabric makes it difficult for the cut edges to fray structurally, a thicker fabric is obtained. This places restrictions on fabrics that can be obtained by fabric design, and clothing applications are limited.

In the case of the technique disclosed in Patent Document 2, the low melting point polyurethane elastic fiber causes a decline in fabric recoverability when treated under high temperature conditions in the setting process used to fix the fabric or product or the heat in the dyeing process. When subjected to more severe thermal processing conditions, breakage of the polyurethane elastic fiber occurs. Therefore, products using this fabric have heat restrictions placed on the processing conditions.

In the case of the techniques disclosed in Patent Documents 3 to 5, adhesive performance has not yet reached a satisfactory level. Because they contain a thermally adhesive component, fiber separation worsens during unwinding. It is an object of the present invention to provide a polyurethane elastic fiber with excellent spinnability, stretchability, thermal adhesion, and unwinding properties, and a production method therefor.

[Means for Solving the Problem]

The polyurethane fiber of the present invention solves this problem using the following means.

(1) A polyurethane elastic fiber having as a main component a polyurethane whose main starting materials are a polymer diol and a diisocyanate, wherein the polyurethane elastic fiber contains the three components in (a) through (c) below.

(a) A thermoplastic polyurethane elastomer
(b) A rosin and/or derivative thereof
(c) A cellulose ester and/or derivative thereof

(2) A polyurethane elastic fiber according to (1), wherein the amount of (a) above is 0.3% by mass or more and 30% by mass or less.

(3) A polyurethane elastic fiber according to (1) or (2), wherein the amount of (b) above is 0.1% by mass or more and 10% by mass or less.

(4) A polyurethane elastic fiber according to any of (1) to (3), wherein the amount of (c) above is 0.5% by mass or more and 10% by mass or less.

(5) A method for producing a polyurethane elastic fiber, the method comprising adding a thermoplastic polyurethane elastomer, a rosin and/or derivative thereof, and a cellulose ester and/or derivative thereof to a polyurethane spinning stock solution whose starting materials are a polymer diol and a diisocyanate, and spinning.

[Effect of the Invention]

The present invention is able to provide a polyurethane elastic fiber that can be used to obtain a fabric with excellent stretchability and thermal adhesiveness, as well as wound fibers with excellent unwinding properties.

As a result, a fabric using this polyurethane elastic fiber has a greater degree of freedom in terms of the temperature range during processing, and both looks good and feels good. Because a polyurethane elastic fiber of the present invention has very good unwinding properties when wound, less fiber breakage occurs during the weaving process. Because the unwinding process can be performed at high speed, productivity is excellent.

[Best Mode for Carrying Out the Invention]

The present invention will now be described in greater detail.

First, the polyurethane used in the present invention will be described.

There are no particular restrictions on the polyurethane used as the main component of a polyurethane elastic fiber of the present invention as long as the starting materials are a polymer diol and a diisocyanate. Any chain extender or end blocker may be used. Here, being the main component of the polyurethane elastic fiber means constituting more than 50% of the polyurethane elastic fiber. A polymer diol and diisocyanate being starting materials means the resulting polyurethane polymer has a structure derived from each component. In other words, in the present specification, the structure of a polyurethane polymer obtained from a polymer diol and a diisocyanate as starting materials is specified, but equivalent structures may be formed from different raw materials, and the raw materials themselves are not specified. Similarly, even when the same raw materials are used for synthesis, there are no particular restrictions on the synthesis method. For example, it may be a polyurethane urea composed of a polymer diol, a diisocyanate, and a low molecular weight diamine as a chain extender, or a polyurethane urethane composed of a polymer diol, a diisocyanate, and a low molecular weight diol. It may also be a polyurethane urea using a compound having a hydroxyl group and an amino group in the molecule as a chain extender. A polyfunctional glycol or isocyanate having trifunctionality or higher is preferably used as long as the effects of the present invention are not impaired. From the standpoint of thermal adhesion, a polyurethane composed of a polymer diol, a diisocyanate, and a low molecular weight diol is preferred.

Typical structural units constituting a polyurethane elastic fiber of the present invention will now be described.

The polymer diol used as a starting material for the polyurethane in the present invention is preferably polyether-based diol, a polyester-based diol, or a polycarbonate diol. A polyether diol is especially preferred from the standpoint of imparting flexibility and elasticity to the fiber.

Preferred examples of polyether diols include polyethylene oxide, polyethylene glycol, polyethylene glycol derivatives, polypropylene glycol, polytetramethylene ether glycol (PTMG), modified PTMG that is a copolymer with tetrahydrofuran (THF) and 3-methyltetrahydrofuran, modified PTMG that is a copolymer with THF and 2,3-dimethyl THF, the polyol with side chains on both sides that is disclosed in JP 2615131 B2, and a random copolymer in which THF and ethylene oxide and/or propylene oxide are irregularly arranged. One or more of these polyether diols may be mixed together or copolymerized and then used.

From the standpoint of obtaining wear resistance and light resistance, preferred examples include butylene adipate, polycaprolactone diol, polyester diols such as the polyester polyol with a side chain disclosed in JP S61-026612 A, and the polycarbonate diol disclosed in JP H02-289516 A.

These polymer diols may be used alone, or two or more may be mixed together or copolymerized and then used.

From the standpoint of obtaining elasticity, strength, and heat resistance when made into a fiber, the molecular weight of the polymer diol used in the present invention is preferably 1,000 or more and 8,000 or less, and more preferably 1,800 or more and 6,000 or less. When a polyol with a molecular weight in this range is used, elastic fibers having excellent elasticity, strength, elastic resilience, and heat resistance can be easily obtained.

The aromatic diisocyanates used in the present invention are especially suitable for synthesizing polyurethanes with high heat resistance and strength. Examples include diphenylmethane diisocyanate (MDI), tolylene diisocyanate, 1,4-diisocyanate benzene, xylylene diisocyanate, and 2,6-naphthalene diisocyanate. Preferred examples of alicyclic diisocyanates include methylenebis (cyclohexyl isocyanate), isophorone diisocyanate, methylcyclohexane 2,4-diisocyanate, methylcyclohexane 2,6-diisocyanate, cyclohexane 1,4-diisocyanate, hexahydroxylylene diisocyanate, hexahydrotolylene diisocyanate, and octahydro-1,5-naphthalenediisocyanate. Aliphatic diisocyanates are especially effective for suppressing the yellowing of polyurethane elastic fibers. These diisocyanates may be used alone or in combinations of two or more.

The chain extender used in the present invention is preferably at least one of a low molecular weight diamine and a low molecular weight diol. The molecule may also have a hydroxyl group and an amino group such as ethanolamine.

Preferred examples of low molecular weight diamines include ethylenediamine, 1,2-propanediamine, 1,3-propanediamine, hexamethylenediamine, p-phenylenediamine, p-xylenediamine, m-xylylenediamine, p,p'-methylenedianiline, 1,3- cyclohexyldiamine, hexahydromethphenylenediamine, 2-methylpentamethylenediamine, and bis (4-aminophenyl) phosphine oxide. These may be used alone or in combinations of two or more. Ethylenediamine is especially preferred. Ethylenediamine can be used to easily obtain a fiber having excellent elasticity, elasticity recovery, and heat resistance. A triamine compound that can form a crosslinked structure, such as diethylenetriamine, may be added to these chain extenders as long as the effects of the present invention are not lost.

Typical examples of low molecular weight diols include ethylene glycol, 1,3 propanediol, 1,4 butanediol, bishydroxyethoxybenzene, bishydroxyethylene terephthalate, and 1-methyl-1,2-ethanediol. These may be used alone or in combinations of two or more. Use of 1,3 propanediol and 1,4 butanediol is especially preferred. When these are used, the diol-extended polyurethane has higher heat resistance and a stronger fiber can be obtained.

From the standpoint of obtaining fibers with high durability and strength, the number average molecular weight of a polyurethane urea polymer used in the present invention is preferably in the range of 30,000 or more and 150,000 or less. The molecular weight is measured by GPC and converted in terms of polystyrene.

In the present invention, the polyurethane elastic fiber having the basic configuration described above contains a thermoplastic polyurethane elastomer, a rosin and/or derivative thereof, and a cellulose ester and/or derivative. Because it contains a thermoplastic polyurethane elastomer, a rosin and/or derivative thereof, and a cellulose ester and/or derivative, excellent thermal adhesive strength and unwinding properties can be realized without impairing spinnability and stretchability.

The melting point of the thermoplastic polyurethane elastomer in the present invention is preferably from 70 to 160°C. When the melting point is less than 70°C, spinnability deteriorates and the fiber is more likely to stick when wound. When the melting point is greater than 160°C, the desired thermal adhesiveness cannot be obtained unless the heat treatment temperature is raised.

The thermoplastic polyurethane elastomer in the present invention is preferably adipate-based, ether-based, caprolactone-based, or polycarbonate-based polymer diol. Among these, an ether-based thermoplastic polyurethane elastomer is preferable from the standpoint of good spinnability and thermal adhesion.

From the standpoint of obtaining good spinnability, well-balanced mechanical properties, thermal adhesion, and heat resistance, the amount of thermoplastic polyurethane elastomer is preferably in the range of 0.3% by mass or more and 30% by mass or less in the fiber. When the amount of thermoplastic polyurethane elastomer is less than 0.3% by mass in the polyurethane elastic fiber, sufficient thermal adhesiveness is not obtained. When the amount exceeds 30% by mass, spinnability and basic physical characteristics deteriorate. From the standpoint of obtaining better heat adhesion and heat resistance, the amount is more preferably 2% by mass or more and 25% by mass or more, and 20% by mass or less. The amount to be added is preferably tested beforehand and determined based on the intended use.

The method used to add from 0.3 to 30% by mass of a thermoplastic polyurethane elastomer to a polyurethane elastic fiber can be to add the thermoplastic polyurethane elastomer to a polyurethane spinning stock solution with, for example, N,N-dimethylformamide or N,N-dimethylacetamide before spinning the solution, and optionally performing stirring or mixing to disperse or dissolve it uniformly. The thermoplastic polyurethane elastomer may be uniformly dispersed or dissolved in advance, and then mixed with a polyurethane solution using the same solvent.

When the thermoplastic polyurethane elastomer does not dissolve in a solvent such as N,N-dimethylformamide or N,N-dimethylacetamide, it can be dispersed in the polyurethane spinning stock solution in the form of fine particles with an average particle size of 10 microns or less.

In an elastic fiber of the present invention, a rosin and/or a derivative thereof is included with the thermoplastic polyurethane elastomer. The rosin in the present invention has as its main component a mixture of abietic acid having a three ring structure, a conjugated double bond, and a carboxyl group with its isomers. Rosins are classified according to the method of collection, and can be any gum rosin, tall oil rosin, or wood rosin. Examples of rosin derivatives include hydrogenated rosins, disproportionated rosins, maleated rosins, acrylicized rosins, rosin esters, and rosin-containing diols. These rosins and/or derivatives thereof may be used alone or in mixtures of two or more.

In order to realize thermal adhesiveness using the heat during processing, the rosin and/or derivative thereof preferably has a thermal softening point of 70°C or higher and 150°C or lower. The thermal softening point of the rosin and/or derivative thereof in the fiber may be measured in the following manner. First, the fiber is immersed in a solvent (toluene/acetone, volume ratio: 1/1) for three hours, and then removed. The solvent is then evaporated at room temperature to allow the rosin and/or derivative thereof to precipitate out. The softening point of the precipitated rosin and/or derivative thereof is then measured using the ring-and-ball method in accordance with JIS K5902 (1969). Specifically, the rosin and/or derivative thereof is melted in an evaporating dish at as low a temperature as possible and poured into a ring preheated to the appropriate temperature. After allowing it to cool, a mildly heated knife is used to cut the raised portion from the flat surface along the upper edge of the ring. The ring filled with the adhesiveness-imparted resin is fitted into predetermined holes in a support and then placed in a glass container (diameter 85 mm, height 127 mm or more). The liquid temperature of the glycerin heat medium in the glass container is kept for 15 minutes at a temperature that is at least 45°C above the predetermined softening point. Next, a steel ball is placed in the center of the rosin and/or derivative thereof in the ring, and then placed upon the support. This is heated while keeping the distance from the top of the ring to the glycerin solution at 50 mm or more. From 45°C above the predetermined softening point at the start of heating, the temperature is raised by $5.0 \pm 0.5$°C per minute, and the temperature at which the rosin and/or derivative thereof softens and comes into contact with the bottom plate is set as the softening point.

From the viewpoint of obtaining good spinnability, well-balanced mechanical properties, thermal adhesion, and heat resistance, the amount of rosin and/or derivative thereof in the polyurethane elastic fiber is preferably in the range of 0.1% by mass or more and 10% by mass or less. From the standpoint of obtaining better thermal adhesion and heat resistance, the amount is more preferably 0.1% by mass or more and 5% by mass or less. The amount to be added is preferably tested beforehand and determined based on the intended use.

From the standpoint of obtaining polyurethane fiber with suitable transparency and keeping the fiber from becoming discolored by the heat in the spinning process, the rosin and/or derivative thereof used in the present invention preferably has a Hazen color of 400 or less.

A polyurethane elastic fiber of the present invention also contains a cellulose ester and/or a derivative thereof. By including a cellulose ester and/or a derivative thereof in a polyurethane elastic fiber, a polyurethane elastic fiber can be obtained which has excellent thermal adhesiveness and excellent unwinding properties.

The cellulose ester used in the present invention is a compound in which at least one of the three hydroxyl groups in the cellulose has been esterified with an acid. Esters with nitric acid, acetic acid, propionic acid, butyric acid, and other higher fatty acids, and mixed esters with two or more of these acids are preferred. From the standpoint of obtaining good spinnability, the acid is more preferably a compound esterified with a mixed acid containing an organic acid having 2 or more and 22 or less carbon atoms. Preferred examples include cellulose acetate derived from cellulose and acetic acid, cellulose acetate butyrate derived from cellulose, acetic acid and butyric acid, cellulose acetate propionate derived from cellulose, acetic acid and propionic acid, so-called cellulose acetate plastics, which are molding plastics in which some hydroxyl groups have remained after adjusting the acid-hydroxyl equivalent, and molding plastics that contain an adipic acid-based plasticizer or phthalic acid-based plasticizer at any ratio and that have a suitable heat softening point and melt viscosity. Among these, from the standpoint of improving the unwinding properties of the polyurethane elastic fiber, cellulose acetate butyrate is preferred, and a butyryl group content in the triester of 30% by weight or more is especially preferred.

In the present invention, from the standpoint of obtaining good spinnability, well-balanced mechanical characteristics, and heat resistance, the amount of cellulose ester and/or derivative thereof is preferably in the range of 0.5% by mass or more and 10% by mass or less, and the drop in the melting point on the high temperature side of the polyurethane fibers is preferably small. From the standpoint of thermal adhesiveness and unwinding properties, an amount of 0.5% by mass or more and 10% by mass or less is more preferred. The amount to be added is preferably tested beforehand and determined based on the intended use.

From the standpoint of faster dispersion and dissolution in polyurethane, setting the target characteristics of the resulting polyurethane fiber, obtaining a polyurethane elastic fiber with suitable transparency, keeping the amount of cellulose ester and/or derivative thereof from decreasing or discoloring the fiber due to the heat of the spinning process, the cellulose ester and/or derivative thereof used in the present invention preferably has a viscosity at 20°C of 200 cP or more and 10000 P or less when prepared as a 5% by mass DMAc solution.

One or more end blockers is preferably mixed into a polyurethane elastic fiber of the present invention. Preferred examples of end blockers include monoamines such as dimethylamine, diisopropylamine, ethylmethylamine, diethylamine, methylpropylamine, isopropylmethylamine, diisopropylamine, butylmethylamine, isobutylmethylamine, isopentylmethylamine, dibutylamine, and diamylamine, monools such as ethanol, propanol, butanol, isopropanol, allyl alcohol, and cyclopentanol, and monoisocyanates such as phenyl isocyanate.

A polyurethane elastic fiber of the present invention may contain various additives such as stabilizers and pigments. Preferred examples of light stabilizers and antioxidants include hindered phenolic agents such as BHT and Sumilyzer (registered trademark) GA-80 from Sumitomo Chemical Co., Ltd., benzotriazole-based and benzophenone-based agents such as Tinuvin (registered trademark) from Ciba Geigy Co., Ltd., phosphorus-based agents such as Sumilyzer (registered trademark) P-16 from Sumitomo Chemical Co., Ltd., hindered amine agents, pigments such as iron oxide and titanium oxide, minerals such as hydrotalcite compounds, huntite, hydromagnesite, and tourmaline, inorganic materials such as zinc oxide, cerium oxide, magnesium oxide, calcium carbonate, and carbon black, fluorine-based or silicone-based resin powders, metal soaps such as magnesium stearate, disinfectants and deodorizers containing silver, zinc, or compounds of these, lubricants such as silicones and mineral oils, and antistatic agents such as cerium oxide, betaine, and phosphoric acid. These are preferably reacted with the polymers. In order to improve durability with respect to light and various types of nitrogen oxides, a nitrogen oxide supplement such as HN-150 from Nippon Hydrazine Co., Ltd., a thermal oxidation stabilizer such Sumilyzer (registered trademark) GA-80 from Sumitomo Chemical Co., Ltd., or a light stabilizer such as Sumisorb (registered trademark) 300 #622 from Sumitomo Chemical Co., Ltd. is preferably used.

The method for producing a polyurethane elastic fiber of the present invention will now be explained in detail.

In the present invention, a thermoplastic polyurethane elastomer, a rosin and/or derivative thereof, and a cellulose ester and/or derivative thereof are added to a polyurethane spinning stock solution whose starting materials are a polymer diol and a diisocyanate, and the resulting spinning stock solution is spun. The thermoplastic polyurethane elastomer, rosin and/or derivative thereof, and cellulose ester and/or derivative thereof may be added during the polyurethane polymerization stage. However, the polyurethane solution is preferably prepared in advance before adding these components.

A polyurethane solution or polyurethane as the solute in a solution may be prepared using melt polymerization, solution polymerization, or some other method. However, the solution polymerization method is especially preferred. In the solution polymerization method, not many foreign substances such as gels are produced in the polyurethane, the spinning solution is easy to spin, and a polyurethane elastic fiber with a low degree of fineness is easy to obtain. Of course, the solution polymerization method is also advantageous in that a step of making a solution can be omitted.

A polyurethane that is especially suitable for the present invention is synthesized using PTMG with a number average molecular weight of 1800 or more and 6000 or less as the polymer diol, MDI as the diisocyanate, and at least one type among ethylene glycol, 1,3-propanediol and 1,4-butanediol as the diol, and has a melting point on the high temperature side in the range of 100°C or more and 260°C or less.

A polyurethane can be obtained by synthesizing the raw materials mentioned above in a solvent such as DMAc, DMF, DMSO, NMP, or one containing any of these as the main component. Preferred methods include the so-called one-shot method, in which the raw materials are added to a solvent, dissolved, heated to an appropriate temperature, and reacted to form a polyurethane, and a method in which a polymer diol and diisocyanate are melt-reacted, and the reaction product is dissolved in a solvent and reacted with the chain extender to obtain a polyurethane.

When a diol is used as a chain extender, adjusting the polyurethane melting point on the high side to a range of 100°C or higher and 260°C or lower is typically achieved by controlling the types and ratios of polymer diols, MDIs, and diols used. When the molecular weight of the polymer diol is low, a polyurethane with a high melting point can be obtained by increasing the relative ratio of MDI. Similarly, when the molecular weight of the diol is low, a polyurethane with a high melting point can be obtained by reducing the relative ratio of the polymer diol.

When the molecular weight of the polymer diol is 1800 or more, the polymerization is preferably conducted at a ratio of (moles of MDI)/(moles of polymer diol) $\geq$ 1.5 in order to raise the melting point on the high side to 100°C or more.

In synthesizing these polyurethanes, one type or a mixture of two or more types of catalysts such as amine catalysts and organometallic catalysts is preferably used.

Examples of amine catalysts include N,N-dimethylcyclohexylamine, N,N-dimethylbenzylamine, triethylamine, N-methylmorpholine, N-ethylmorpholine, N,N,N',N'-tetramethylethylenediamine, N,N,N',N'-tetramethyl-1,3-propanediamine, N,N,N',N'-tetramethylhexanediamine, bis-2-dimethylaminoethyl ether, N,N,N',N',N'-pentamethyldiethylenetriamine, tetramethylguanidine, triethylenediamine, N,N'-dimethylpiperazine, N-methyl-N'-dimethylaminoethyl-piperazine, N-(2-dimethylaminoethyl) morpholine, 1-methylimidazole, 1,2-dimethylimidazole, N,N-dimethylaminoethanol, N,N,N'-trimethylaminoethylethanolamine, N-methyl-N'-(2-hydroxyethyl) piperazine, 2,4,6-tris (dimethylaminomethyl) phenol, N,N-dimethylaminohexanol, and triethanolamine.

Examples of organometallic catalysts include tin octanoate, dibutyl tin dilaurate, and lead dibutyl octanoate.

The concentration of polyurethane urea polymers in the resulting polyurethane polymer solution is preferably in the range of 30% by mass or more and 80% by mass or less.

In the present invention, the thermoplastic polyurethane elastomer, rosin and/or derivative thereof, and cellulose ester and/or derivative thereof are preferably added to such a polyurethane solution. The thermoplastic polyurethane elastomer, rosin and/or derivative thereof, and cellulose ester and/or derivative thereof can be added to the polyurethane solution using any method common in the art. Typical methods include using a static mixer, stirring, using a homomixer, and using a twin-screw extruder. From the standpoint of uniform addition to the polyurethane solution, the added thermoplastic polyurethane elastomer, rosin and/or derivative thereof, and cellulose ester and/or derivative thereof are preferably added in the form of a solution.

When the thermoplastic polyurethane elastomer, rosin and/or derivative thereof, and cellulose ester and/or derivative thereof are preferably added to the polyurethane solution, pigments and chemicals such as lightfasteners and antioxidants may be added at the same time.

A polyurethane fiber of the present invention can be obtained using, for example, dry spinning, wet spinning, or melt spinning an undiluted spinning solution described above, and then winding the fiber. Dry spinning is especially preferred from the standpoint of stable spinning at all finenesses from thin to thick.

There are no particular restrictions on the fineness or cross-sectional profile of a polyurethane elastic fiber of the present invention. For example, the cross-sectional profile of the fibers may be circular or flat.

There are no particular restrictions on the dry spinning method, and spinning may be performed after selecting the appropriate spinning conditions for the desired characteristics and the spinning equipment.

For example, because the permanent strain rate and stress relaxation of a polyurethane elastic fiber of the present invention are particularly susceptible to the speed ratio between the godet roller and the winder, the spinning conditions are preferably determined based on the intended use for the fiber.

From the standpoint of obtaining a polyurethane elastic fiber with the desired permanent strain rate and stress relaxation, take up is preferably conducted at a speed ratio between the godet roller and the winder in the range of 1.10 or more and 1.65 or less.

When obtaining a polyurethane fiber with low permanent strain and low stress relaxation, the speed ratio between the godet roller and the winder is preferably in the range of 1.15 or more and 1.4 or less, and more preferably in the range of 1.15 or more and 1.35 or less.

When obtaining a polyurethane fiber with high permanent strain and high stress relaxation, the speed ratio between the godet roller and the winder is preferably in the range of 1.25 or more and 1.65 or less, and more preferably in the range of 1.35 or more and 1.65 or less.

Also, from the standpoint of improving the strength of the resulting polyurethane elastic fiber, the spinning speed is preferably 300 m/min or more.

A polyurethane elastic fiber obtained in the manner described above can be used, for example, to produce a fabric with other fibers. When producing such a fabric, fibers that can be used with the polyurethane elastic fiber include polyamide fibers and polyester fibers.

Here, polyamide fibers include, but are not limited to, nylon 6 fibers and nylon 66 fibers. Examples of polyester fibers include polyethylene terephthalate, polytrimethylene terephthalate, polytetramethylene terephthalate, ester-based copolymers containing polytetramethylene glycol and ethylene glycol as the main diol components, and fibers composed of these polyesters such as cationic dyeable modified polyesters.

From the standpoint of processability and fabric durability, the fabric is preferably composed mainly of these polyamide fibers or polyester fibers and a polyurethane fiber of the present invention, and the fabric is preferably combined with synthetic fibers made of polyacrylic, polyvinyl chloride, etc., regenerated cellulose fibers made of cuprammonium rayon, viscose rayon, and purified cellulose, and natural fiber materials such as regenerated protein fibers, semi-synthetic fibers, cotton, silk, and wool.

A polyurethane elastic yarn used in a fabric may be a bare yarn, or a composite yarn such as an air covered yarn, a twisted yarn with another fiber, a plied yarn, or an interlaced yarn. A fabric composed of a polyurethane elastic fiber and another fiber may be a knitted fabric composed of a composite yarn, or may be cross-knitted with other fibers using, for example, warp knitting, circular knitting, or weft knitting.

When the fabric is a knitted fabric, it may be warp knitted or weft knitted. Examples include tricot knitting, raschel knitting, and circular knitting. The knitting structure may be half knitting, reverse half knitting, double atlas knitting, or double denby knitting, etc. The surface of the knitted fabric is preferably composed of a natural fiber, a chemical fiber, or a synthetic fiber other than the polyurethane fiber from the standpoint of texture.

[Examples]

The present invention will now be described in greater detail with reference to examples. The methods used to evaluate the various properties of the present invention will be explained first.

[Method for Analyzing Rosins and/or Derivatives Thereof in Fibers]

A fiber was immersed in a solvent (toluene/acetone, volume ratio: 1/1) for three hours, and then the solvent was measured using an IR meter. The amount in the fiber was then determined from the absorption around 1580 cm$^{-1}$ with a calibration curve using a solvent of known concentration.

[Thermal Adhesiveness]

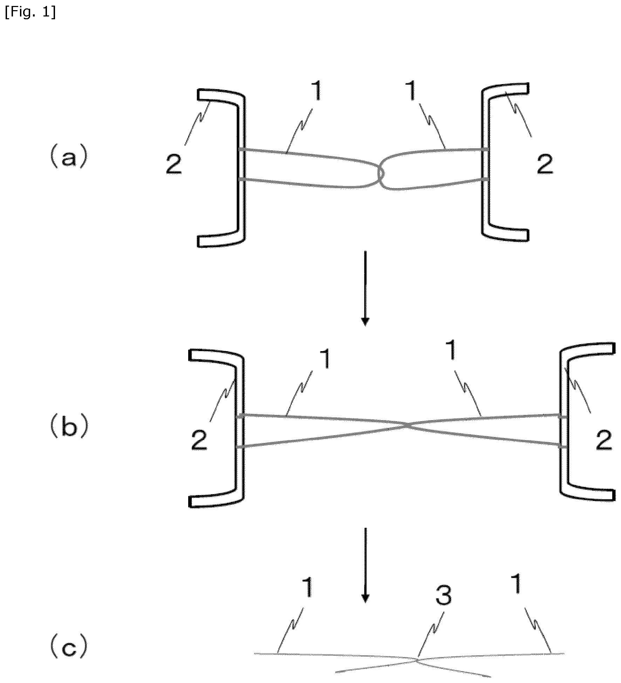

Two test fibers 1 sampled at a length of 10 cm (with both ends tied and fixed) were intertwined around the center as shown in Fig. 1 and fixed to a metal frame 2 at an interval of 1 cm (a). Each test fiber 1 was stretched by 30%, and then treated at the dry heat temperatures shown in the table for one minute (b). After the treatment, the samples were removed from the metal frame 2 so that the two test fibers remained in contact with each other only in the bonded portions 3 (c). In an Instron 5965-type tensile tester, one end of each test fiber was placed in the upper and lower chucks of the tester and set. The maximum tensile stress when the bonded portions were peeled apart at a rate of 50 cm/min was measured, and the measured value was divided by the fineness of the polyurethane elastic fiber sample.

Where the fibers broke was also checked. When a fiber broke at an intersection, an evaluation of X was assigned. When a fiber broke at another location, an evaluation of Y was assigned. When a fiber broke at a location other than an intersection, the strength at the bonding point is greater than the breaking strength, and the fiber has excellent thermal adhesion.

[Strength, Stress Relaxation, Permanent Distortion, Elasticity]

Strength, stress relaxation, permanent distortion, and elasticity were measured by conducting a tensile test on a sample fiber using an Instron 5965 tensile tester.

These properties are defined in the following way.

A 5 cm (L1) sample was stretched by 300% five times at a tensile rate of 50 cm/min. The stress after the fifth time was used as (G1). Next, the 300% elongation was held for 30 seconds. The stress after holding for 30 seconds was used as (G2). Next, the length of the sample fiber after elongation recovery when the stress returned to 0 was used as (L2). The sample fiber was stretched a sixth time until it broke. The stress at the time of breaking was used as (G3), and the length of the sample fiber at the time of breaking was used as (L3).

The properties were calculated using the following equations.

$$Strength = (G3)$$

$$Stress\ Relaxation = 100 \times ((G1)-(G2))/(G1)$$

$$Permanent\ Distortion = 100 \times ((L2)-(L1))/(L1)$$

$$Elongation = 100 \times ((L3)-(L1))/(L1)$$

[Unwinding Properties of Wound Fiber]

First, 200 g of wound polyurethane elastic fiber was allowed to stand at 25°C and 65% RH for 14 days and 56 days. The wound fiber was peeled from the paper tube to a position of 1 to 2 mm, and the peeled off wound fiber was placed so as to come into contact with a pearskin roller (a). While rotating the roller, the polyurethane elastic fiber was unwound at a roller surface speed of 30 m/min. The unwound polyurethane elastic fiber was run one time around a pearskin roller (b) of the same diameter installed at a distance of 100 cm. The surface velocity of the roller (b) was gradually changed, and when the polyurethane elastic fiber had been removed from the roller (a), the speed of the roller (b) at which the polyurethane elastic fiber had been smoothly delivered without lifting the wound fiber was determined. The speed ratio (b)/(a) of the rollers was used to determine the unwinding properties of the polyurethane elastic fiber. A lower value indicates better separability of the polyurethane elastic fiber.

The unwinding properties test was performed using a pair of wound fibers, and the evaluation used the average value of the two.

[Example 1]

(Preparation of Polymer Solution)

· A DMAC solution (35% by mass) of a polyurethane polymer consisting of PTMG with a molecular weight of 1,800, MDI, ethylenediamine, and a diethylamine end group blocker was prepared.

· Next, a polyurethane solution produced by reacting a t-butyldiethanolamine antioxidant with methylene-bis-(4-cyclohexyl isocyanate) (DuPont Metachlor (registered trademark) 2462D) was mixed with a condensation polymer of p-cresol and divinylbenzene (DuPont Metachlor (registered trademark) 2390D) at a ratio (mass ratio) of 2:1 to prepare an antioxidant DMAc solution (concentration 35% by mass).

· Then, 97 parts by mass of the DMAc solution of the polyurethane polymer and 3 parts by mass of the DMAc antioxidant solution were mixed together to prepare polymer solution P1.

(Preparation of Thermoplastic Polyurethane Elastomer Solution)

· A DMAc solution (35% by mass) of the thermoplastic polyurethane Pandex (registered trademark) T-8175N from DIC Covestro Co., Ltd. was stirred at no higher than 60°C to obtain a thermoplastic polyurethane elastomer solution (A1).

(Preparation of Rosin Solution)

· A DMAc solution (35% by mass) of a rosin from Arakawa Chemical Co., Ltd. (tradename: Pine Crystal (R) KR-614, softening point: 86°C) was stirred at no higher than 25°C to obtain a rosin solution (B1).

(Preparation of Cellulose Ester Solution)

· A DMAc solution (35% by mass) of a cellulose ester from the Eastman Chemical Company (tradename: Eastman™ Cellulose Acetate Butyrate (CAB-551-0.2)) was stirred at no higher than 25°C to obtain a cellulose ester solution (C1).

(Preparation of Spinning Stock Solution)

· Polymer solution P1 and solutions A1, B1 and C1 were uniformly mixed together at 88% by mass, 8% by mass, 1% by mass and 3% by mass, respectively, to prepare spinning solution D1.

(Production of Polyurethane Elastic Fiber)

· Spinning solution D1 was dry-spun at a speed of 490 m/min and at a speed ratio of 1.3 between the godet roller and the winder. During winding, 3% by mass of silicone-based oil with a viscosity of 25 mm$^2$/s was applied to obtain 200 g of a wound 22 dtex, two-filament polyurethane fiber containing 8% by mass thermoplastic polyurethane elastomer, 1% by mass rosin, and 3% by mass cellulose ester.

The elasticity, strength, permanent distortion, stress relaxation, thermal adhesiveness, and unwinding properties of the resulting polyurethane elastic fiber were measured. The results are shown in Table 1. The resulting polyurethane elastic fiber had a good balance between thermal adhesiveness and unwinding properties over time.

[Example 2]

(Preparation of Spinning Stock Solution)

· Polymer solution P1 and solutions A1, B1 and C1 were uniformly mixed together at 76% by mass, 16% by mass, 2% by mass and 6% by mass, respectively, to prepare spinning solution D2.

(Production of Polyurethane Elastic Fiber)

· Spinning solution D2 was dry-spun at a speed of 490 m/min and at a speed ratio of 1.3 between the godet roller and the winder. During winding, 3% by mass of silicone-based oil with a viscosity of 25 mm$^2$/s was applied to obtain 200 g of a wound 22 dtex, two-filament polyurethane fiber containing 16% by mass thermoplastic polyurethane elastomer, 2% by mass rosin, and 6% by mass cellulose ester.

The elasticity, strength, permanent distortion, stress relaxation, thermal adhesiveness, and unwinding properties of the resulting polyurethane elastic fiber were measured. The results are shown in Table 1. The resulting polyurethane elastic fiber had a good balance between thermal adhesiveness and unwinding properties over time.

[Example 3]

(Preparation of Spinning Stock Solution)

· Polymer solution P1 and solutions A1, B1 and C1 were uniformly mixed together at 68% by mass, 24% by mass, 2% by mass and 6% by mass, respectively, to prepare spinning solution D3.

(Production of Polyurethane Elastic Fiber)

· Spinning solution D3 was dry-spun at a speed of 490 m/min and at a speed ratio of 1.3 between the godet roller and the winder. During winding, 3% by mass of silicone-based oil with a viscosity of 25 mm$^2$/s was applied to obtain 200 g of a wound 22 dtex, two-filament polyurethane fiber containing 24% by mass thermoplastic polyurethane elastomer, 2% by mass rosin, and 6% by mass cellulose ester.

The elasticity, strength, permanent distortion, stress relaxation, thermal adhesiveness, and unwinding properties of the resulting polyurethane elastic fiber were measured. The results are shown in Table 1. The resulting polyurethane elastic fiber had a good balance between thermal adhesiveness and unwinding properties over time.

[Example 4]

(Preparation of Spinning Stock Solution)

· Polymer solution P1 and solutions A1, B1 and C1 were uniformly mixed together at 60% by mass, 32% by mass, 6% by mass and 2% by mass, respectively, to prepare spinning solution D3.

(Production of Polyurethane Elastic Fiber)

· Spinning solution D4 was dry-spun at a speed of 490 m/min and at a speed ratio of 1.3 between the godet roller and the winder. During winding, 3% by mass of silicone-based oil with a viscosity of 25 mm$^2$/s was applied to obtain 200 g of a wound 22 dtex, two-filament polyurethane fiber containing 32% by mass thermoplastic polyurethane elastomer, 6% by mass rosin, and 2% by mass cellulose ester.

The elasticity, strength, permanent distortion, stress relaxation, thermal adhesiveness, and unwinding properties of the resulting polyurethane elastic fiber were measured. The results are shown in Table 1. The resulting polyurethane elastic fiber had a good balance between thermal adhesiveness and unwinding properties over time.

[Example 5]

(Preparation of Polymer Solution)

· A DMAC solution (35% by mass) of a polyurethane polymer consisting of PTMG with a molecular weight of 2,000, MDI, ethylenediamine, and a 1-butanol end group blocker was prepared.

· Next, a polyurethane solution produced by reacting a t-butyldiethanolamine antioxidant with methylene-bis-(4-cyclohexyl isocyanate) (DuPont Metachlor (registered trademark) 2462D) was mixed with a condensation polymer of p-cresol and divinylbenzene (DuPont Metachlor (registered trademark) 2390D) at a ratio (mass ratio) of 2:1 to prepare an antioxidant DMAc solution (concentration 35% by mass).

· Then, 96 parts by mass of the DMAc solution of the polyurethane polymer and 4 parts by mass of the antioxidant solution were mixed together to prepare polymer solution P2.

(Preparation of Spinning Stock Solution)

· Polymer solution P2 and solutions A1, B1 and C1 were uniformly mixed together at 88% by mass, 8% by mass, 3% by mass and 1% by mass, respectively, to prepare spinning solution D5.

(Production of Polyurethane Elastic Fiber)

· Spinning solution D5 was dry-spun at a speed of 450 m/min and at a speed ratio of 1.3 between the godet roller and the winder. During winding, 3% by mass of silicone-based oil with a viscosity of 25 mm$^2$/s was applied to obtain 200 g of a wound 20 dtex, monofilament polyurethane fiber containing 8% by mass thermoplastic polyurethane elastomer, 1% by mass rosin, and 3% by mass cellulose ester.

The elasticity, strength, permanent distortion, stress relaxation, thermal adhesiveness, and unwinding properties of the resulting polyurethane elastic fiber were measured. The results are shown in Table 1. The resulting polyurethane elastic fiber had a good balance between thermal adhesiveness and unwinding properties over time.

[Example 6]

(Preparation of Spinning Stock Solution)

· Polymer solution P2 and solutions A1, B1 and C1 were uniformly mixed together at 90.5% by mass, 8% by mass, 1% by mass and 0.5% by mass, respectively, to prepare spinning solution D6.

(Production of Polyurethane Elastic Fiber)

· Spinning solution D6 was dry-spun at a speed of 490 m/min and at a speed ratio of 1.3 between the godet roller and the winder. During winding, 3% by mass of silicone-based oil with a viscosity of 25 $mm^2$/s was applied to obtain 200 g of a wound 20 dtex, monofilament polyurethane fiber containing 8% by mass thermoplastic polyurethane elastomer, 1% by mass rosin, and 0.5% by mass cellulose ester.

The elasticity, strength, permanent distortion, stress relaxation, thermal adhesiveness, and unwinding properties of the resulting polyurethane elastic fiber were measured. The results are shown in Table 1. The resulting polyurethane elastic fiber had a good balance between thermal adhesiveness and unwinding properties over time.

[Example 7]

(Preparation of Spinning Stock Solution)

· Polymer solution P2 and solutions A1, B1 and C1 were uniformly mixed together at 85% by mass, 8% by mass, 1% by mass and 6% by mass, respectively, to prepare spinning solution D7.

(Production of Polyurethane Elastic Fiber)

· Spinning solution D4 was dry-spun at a speed of 490 m/min and at a speed ratio of 1.3 between the godet roller and the winder. During winding, 3% by mass of silicone-based oil with a viscosity of 25 $mm^2$/s was applied to obtain 200 g of a wound 20 dtex, monofilament polyurethane fiber containing 8% by mass thermoplastic polyurethane elastomer, 1% by mass rosin, and 6% by mass cellulose ester.

The elasticity, strength, permanent distortion, stress relaxation, thermal adhesiveness, and unwinding properties of the resulting polyurethane elastic fiber were measured. The results are shown in Table 1. The resulting polyurethane elastic fiber had a good balance between thermal adhesiveness and unwinding properties over time.

[Comparative Example 1]

(Preparation of Spinning Stock Solution)

· Polymer solution P2 and solution A1 were uniformly mixed together at 92% by mass and 8% by mass, respectively, to prepare spinning solution E1.

(Production of Polyurethane Elastic Fiber)

· Spinning solution E1 was dry-spun at a speed of 450 m/min and at a speed ratio of 1.3 between the godet roller and the winder. During winding, 3% by mass of silicone-based oil with a viscosity of 25 mm$^2$/s was applied to obtain 200 g of a wound 20 dtex, monofilament polyurethane fiber containing 8% by mass thermoplastic polyurethane elastomer.

The elasticity, strength, permanent distortion, stress relaxation, thermal adhesiveness, and unwinding properties of the resulting polyurethane elastic fiber were measured. The results are shown in Table 1.

[Comparative Example 2]

(Preparation of Spinning Stock Solution)

· Polymer solution P2 and solution B1 were uniformly mixed together at 99% by mass and 1% by mass, respectively, to prepare spinning solution E2.

(Production of Polyurethane Elastic Fiber)

· Spinning solution E2 was dry-spun at a speed of 450 m/min and at a speed ratio of 1.3 between the godet roller and the winder. During winding, 3% by mass of silicone-based oil with a viscosity of 25 mm$^2$/s was applied to obtain 200 g of a wound 20 dtex, monofilament polyurethane fiber 1% by mass rosin.

The elasticity, strength, permanent distortion, stress relaxation, thermal adhesiveness, and unwinding properties of the resulting polyurethane elastic fiber were measured. The results are shown in Table 1.

[Comparative Example 3]

(Preparation of Spinning Stock Solution)

· Polymer solution P2 and solution C1 were uniformly mixed together at 99% by mass and 3% by mass, respectively, to prepare spinning solution E3.

(Production of Polyurethane Elastic Fiber)

· Spinning solution E3 was dry-spun at a speed of 450 m/min and at a speed ratio of 1.3 between the godet roller and the winder. During winding, 3% by mass of silicone-based oil with a viscosity of 25 mm$^2$/s was applied to obtain 200 g of a wound 20 dtex, monofilament polyurethane fiber containing 3% by mass cellulose ester.

The elasticity, strength, permanent distortion, stress relaxation, thermal adhesiveness, and unwinding properties of the resulting polyurethane elastic fiber were measured. The results are shown in Table 1.

[Comparative Example 4]

(Preparation of Spinning Stock Solution)

· Polymer solution P2 and solutions A1 and B2 were uniformly mixed together at 91% by mass, 8% by mass and 1% by mass, respectively, to prepare spinning solution E4.

EP 4 253 611 A1

(Production of Polyurethane Elastic Fiber)

· Spinning solution E4 was dry-spun at a speed of 450 m/min and at a speed ratio of 1.3 between the godet roller and the winder. During winding, 3% by mass of silicone-based oil with a viscosity of 25 mm$^2$/s was applied to obtain 200 g of a wound 20 dtex, monofilament polyurethane fiber containing 8% by mass thermoplastic polyurethane elastomer and 1% by mass rosin.

The elasticity, strength, permanent distortion, stress relaxation, thermal adhesiveness, and unwinding properties of the resulting polyurethane elastic fiber were measured. The results are shown in Table 1.

[Comparative Example 5]

(Preparation of Spinning Stock Solution)

· Polymer solution P2 and solutions B1 and C1 were uniformly mixed together at 96% by mass, 1% by mass and 3% by mass, respectively, to prepare spinning solution E5.

(Production of Polyurethane Elastic Fiber)

· Spinning solution E5 was dry-spun at a speed of 450 m/min and at a speed ratio of 1.3 between the godet roller and the winder. During winding, 3% by mass of silicone-based oil with a viscosity of 25 mm$^2$/s was applied to obtain 200 g of a wound 20 dtex, monofilament polyurethane fiber containing 1% by mass rosin and 3% by mass cellulose ester.

The elasticity, strength, permanent distortion, stress relaxation, thermal adhesiveness, and unwinding properties of the resulting polyurethane elastic fiber were measured. The results are shown in Table 1.

[Comparative Example 6]

(Preparation of Spinning Stock Solution)

· Polymer solution P2 and solutions A1 and C1 were uniformly mixed together at 89% by mass, 8% by mass and 3% by mass, respectively, to prepare spinning solution E6.

(Production of Polyurethane Elastic Fiber)

· Spinning solution E6 was dry-spun at a speed of 450 m/min and at a speed ratio of 1.3 between the godet roller and the winder. During winding, 3% by mass of silicone-based oil with a viscosity of 25 mm$^2$/s was applied to obtain 200 g of a wound 20 dtex, monofilament polyurethane fiber containing 8% by mass thermoplastic polyurethane elastomer and 3% by mass cellulose ester.

The elasticity, strength, permanent distortion, stress relaxation, thermal adhesiveness, and unwinding properties of the resulting polyurethane elastic fiber were measured. The results are shown in Table 1.

[Comparative Example 7]

(Preparation of Spinning Stock Solution)

· Polymer solution P2 and solutions A1 and B1 were uniformly mixed together at 91% by mass, 8% by mass and 1% by mass, respectively, to prepare spinning solution E7.

(Production of Polyurethane Elastic Fiber)

· Spinning solution E7 was dry-spun at a speed of 450 m/min and at a speed ratio of 1.3 between the godet roller and the winder. During winding, 3% by mass of silicone-based oil with a viscosity of 25 $mm^2$/s was applied to obtain 200 g of a wound 22 dtex, two-filament polyurethane fiber containing 8% by mass thermoplastic polyurethane elastomer and 1% by mass rosin.

The elasticity, strength, permanent distortion, stress relaxation, thermal adhesiveness, and unwinding properties of the resulting polyurethane elastic fiber were measured. The results are shown in Table 1.

[Table 1]

| In the table, "rosin and/or derivative thereof" and "cellulose ester and/or derivative thereof" are abbreviated as "rosin" and "cellulose ester", respectively. |

| | Spinning Stock Solution | Polyurethane | | Additive | | | Tensile Properties | | | | Thermal Adhesion | | | | | | Unwinding of wound Fiber | |
|---|---|---|---|---|---|---|---|---|---|---|---|---|---|---|---|---|---|---|
| | Name | Diisocyanate | Polymer Diol | Thermo-plastic Poly-urethane Elastomer | Rosin | Cellu-lose Es-ter | Elastici-ty | Strenght | Perma-nent Dis-tortion | Stress Relaxa-tion | 160°C | | 170°C | | 180°C | | After 14 Days | After 56 Days |
| | - | Name | Name | Content (mass%) | | | % | cN | % | % | cN/dtex | Evalua-tion | cN/dtex | Evalua-tion | cN/dtex | Evalua-tion | - | - |
| Ex. 1 | D1 | MDI | PTMG1800 | 8 | 1 | 3 | 485 | 20 | 22 | 31 | 0.50 | Y | 0.52 | Y | 0.60 | Y | 1.9 | 1.9 |
| Ex. 2 | D2 | MDI | PTMG1800 | 16 | 2 | 6 | 480 | 19 | 25 | 31 | 053 | Y | 0.52 | Y | 0.58 | Y | 19 | 2.0 |
| Ex. 3 | D3 | MDI | PTMG1800 | 24 | 2 | 6 | 475 | 19 | 27 | 33 | 0.55 | Y | 0.53 | Y | 0.56 | Y | 2.0 | 2.1 |
| Ex. 4 | E8 | MDI | PTMG1800 | 32 | 2 | 6 | 475 | 15 | 35 | 33 | 0.50 | Y | 0.50 | Y | 0.50 | Y | 2.5 | 2.7 |
| Ex. 5 | D4 | MDI | PTMG2000 | 8 | 1 | 3 | 455 | 27 | 23 | 33 | 0.39 | Y | 0.41 | Y | 0.40 | Y | 1.8 | 1.9 |
| Ex. 6 | D5 | MDI | PTMG2000 | 8 | 1 | 0.5 | 455 | 28 | 20 | 32 | 0.33 | Y | 0.35 | Y | 0.35 | Y | 1.9 | 2.0 |
| Ex. 7 | D6 | MDI | PTMG2000 | 8 | 1 | 6 | 455 | 24 | 26 | 30 | 0.40 | Y | 0.42 | Y | 0.41 | Y | 1.7 | 1.7 |
| C. Ex. 1 | E1 | MDI | PTMG2000 | 8 | 0 | 0 | 400 | 23 | 30 | 38 | 0.15 | X | 0.20 | X | 0.30 | X | 2.3 | 2.7 |
| C. Ex. 2 | E2 | MDI | PTMG2000 | 0 | 1 | 0 | 465 | 31 | 20 | 30 | 0.12 | X | 0.15 | X | 0.22 | X | 2.2 | 2.6 |

EP 4 253 611 A1

16

(continued)

EP 4 253 611 A1

In the table, "rosin and/or derivative thereof" and "cellulose ester and/or derivative thereof" are abbreviated as "rosin" and "cellulose ester", respectively.

| | Spinning Stock Solution | Polyurethane | | Additive | | | Tensile Properties | | | | Thermal Adhesion | | | | | | Unwinding of wound Fiber | |
|---|---|---|---|---|---|---|---|---|---|---|---|---|---|---|---|---|---|---|
| | Name | Diisocyanate | Polymer Diol | Thermo-plastic Poly-urethane Elastomer | Rosin | Cellu-lose Es-ter | Elastici-ty | Strenght | Perma-nent Dis-tortion | Stress Relaxa-tion | 160°C | | 170°C | | 180°C | | After 14 Days | After 56 Days |
| | - | Name | Name | Content (mass%) | | | % | cN | % | % | cN/dtex | Evalua-tion | cN/dtex | Evalua-tion | cN/dtex | Evalua-tion | - | - |
| C. Ex. 3 | E3 | MDI | PTMG2000 | 0 | 0 | 3 | 465 | 31 | 22 | 30 | 0.03 | X | 0.05 | X | 0.08 | X | 1.7 | 1.8 |
| C. Ex. 4 | E4 | MDI | PTMG2000 | 8 | 1 | 0 | 455 | 28 | 22 | 33 | 0.16 | X | 0.22 | X | 0.31 | X | 2.5 | 2.9 |
| C. Ex. 5 | E5 | MDI | PTMG2000 | 0 | 1 | 3 | 466 | 31 | 21 | 30 | 0.05 | X | 0.07 | X | 0.12 | X | 1.8 | 1.9 |
| C. Ex. 6 | E6 | MDI | PTMG2000 | 8 | 0 | 3 | 455 | 27 | 23 | 33 | 0.15 | X | 0.19 | X | 0.29 | X | 2.0 | 2.1 |
| C. Ex. 7 | E7 | MDI | PTMG1800 | 8 | 1 | 0 | 457 | 27 | 22 | 32 | 0.05 | X | 0.03 | X | 0.31 | X | 2.5 | 2.9 |

X Break at intersection
Y Break at location other than intersection

[Industrial Applicability]

When polyurethane elastic fibers of the present invention are used, clothes using these elastic fibers have a good fit, and look and feel good. Because thermal adhesiveness is realized using heat during processing, fraying of fabric edges can be suppressed, and a high-quality fabric with fewer processing restrictions can be obtained. Because polyurethane elastic fibers of the present invention have these excellent properties, they can be used alone or in combination with other types of fibers to obtain excellent stretch fabrics, and are suitable for knitting, weaving and cord processing. Specific applications in which these fibers can be used include in tightening materials for various textile products such as socks, stockings, circular knits, tricot knits, swimwear, ski pants, work clothes, firefighting clothes, golf pants, wet suits, brassieres, girdles, gloves and socks, tightening materials for preventing leakage from sanitary products such as disposable diapers, tightening materials for waterproof materials, imitation bait, artificial flowers, electrical insulation, wiping cloths, copier cleaners, and gaskets.

[Brief Description of the Drawings]

[Fig. 1]
Fig. 1 is a schematic diagram showing the method used to measure the thermal adhesive strength of the polyurethane elastic fiber.

[Key to the Drawings]

1: Test fiber
2: Metal frame
3: Bonded portion

**Claims**

1.  A polyurethane elastic fiber having as a main component a polyurethane whose main starting materials are a polymer diol and a diisocyanate, wherein the polyurethane elastic fiber contains the three components in (a) through (c) below.

    (a) A thermoplastic polyurethane elastomer
    (b) A rosin and/or derivative thereof
    (c) A cellulose ester and/or derivative thereof

2.  A polyurethane elastic fiber according to claim 1, wherein the amount of (a) above is 0.3% by mass or more and 30% by mass or less.

3.  A polyurethane elastic fiber according to claim 1 or 2, wherein the amount of (b) above is 0.1% by mass or more and 10% by mass or less.

4.  A polyurethane elastic fiber according to any of claims 1 to 3, wherein the amount of (c) above is 0.5% by mass or more and 10% by mass or less.

5.  A method for producing a polyurethane elastic fiber, the method comprising adding a thermoplastic polyurethane elastomer, a rosin and/or derivative thereof, and a cellulose ester and/or derivative thereof to a polyurethane spinning stock solution whose starting materials are a polymer diol and a diisocyanate, and spinning.

EP 4 253 611 A1

[Fig. 1]

19

## INTERNATIONAL SEARCH REPORT

International application No

**PCT/IB2021/060973**

### A. CLASSIFICATION OF SUBJECT MATTER

INV. D01D5/04    D01F6/70
ADD.

According to International Patent Classification (IPC) or to both national classification and IPC

### B. FIELDS SEARCHED

Minimum documentation searched  (classification system followed by classification symbols)

D01D    D01F

Documentation searched other than minimum documentation to the extent that such documents are included  in the fields searched

Electronic data base consulted during the  international search (name of data base and,  where practicable, search terms used)

**EPO-Internal**

### C. DOCUMENTS CONSIDERED TO BE RELEVANT

| Category* | Citation of document, with indication,  where appropriate, of the relevant passages | Relevant to claim No. |
|---|---|---|
| Y | JP 2009 144267 A (OPELONTEX CO LTD) 2 July 2009 (2009-07-02) paragraphs [0003], [0006], [0007], [0064] - [0078]; example 1; table 1 ----- | 1-5 |
| Y | JP 2006 169677 A (OPELONTEX CO LTD) 29 June 2006 (2006-06-29) paragraphs [0017], [0018], [0024], [0029], [0030], [0051], [0052], [0053], [0054], [0093], [0104] ----- | 1-5 |
| Y | JP 2005 048306 A (TORAY DU PONT KK) 24 February 2005 (2005-02-24) paragraphs [0022], [0024], [0025] ----- -/-- | 1-5 |

| X | Further documents are listed in the  continuation of Box C. | X | See patent family annex. |
|---|---|---|---|

* Special categories of cited documents :

"A" document defining the general state of the art which is not considered to be of particular relevance

"E" earlier application or patent but published on or after the international filing date

"L" document which may throw doubts on priority  claim(s) or which is cited to establish the publication date of another  citation or other special reason (as specified)

"O" document referring to an oral disclosure, use,  exhibition or other means

"P" document published prior to the international filing date but later than the priority date claimed

"T" later document published after the international filing date or priority date and not in conflict with the application but cited to understand the principle or theory underlying the invention

"X" document of particular relevance;; the claimed invention cannot be considered novel or cannot be considered to involve an inventive step when the document is taken alone

"Y" document of particular relevance;; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 25 February 2022 | 14/03/2022 |

| Name and mailing address of the ISA/ European Patent Office, P.B. 5818 Patentlaan 2 NL - 2280 HV Rijswijk Tel. (+31-70) 340-2040, Fax: (+31-70) 340-3016 | Authorized officer Van Beurden-Hopkins |

Form PCT/ISA/210 (second sheet) (April 2005)

## INTERNATIONAL SEARCH REPORT

| International application No |
|---|
| **PCT/IB2021/060973** |

| C(Continuation). DOCUMENTS CONSIDERED TO BE RELEVANT | | |
|---|---|---|
| Category* | Citation of document, with indication, where appropriate, of the relevant passages | Relevant to claim No. |
| A | KR 2012 0077817 A (HYOSUNG CORP [KR]) 10 July 2012 (2012-07-10) paragraphs [0012], [0015], [0016], [0018], [0023] - [0025], [0029]; claims 1,2,3,7 ----- | 1-5 |
| A | CHENG ZENGHUI ET AL: "Sustainable elastomers derived from cellulose, rosin and fatty acid by a combination of "graft from" RAFT and isocyanate chemistry", INTERNATIONAL JOURNAL OF BIOLOGICAL MACROMOLECULES, vol. 131, 29 October 2018 (2018-10-29), pages 387-395, XP085672178, ISSN: 0141-8130, DOI: 10.1016/J.IJBIOMAC.2019.02.161 page 389, paragraph 3 ----- | 1-5 |
| A | JP 2014 043490 A (SANYO CHEMICAL IND LTD) 13 March 2014 (2014-03-13) paragraphs [0095], [0110], [0147] ----- | 1-5 |

Form PCT/ISA/210 (continuation of second sheet) (April 2005)

## INTERNATIONAL SEARCH REPORT
Information on patent family members

International application No

PCT/IB2021/060973

| Patent document cited in search report | | Publication date | Patent family member(s) | | Publication date |
|---|---|---|---|---|---|
| JP 2009144267 | A | 02-07-2009 | JP | 4867907 B2 | 01-02-2012 |
| | | | JP | 2009144267 A | 02-07-2009 |
| JP 2006169677 | A | 29-06-2006 | JP | 4348727 B2 | 21-10-2009 |
| | | | JP | 2006169677 A | 29-06-2006 |
| JP 2005048306 | A | 24-02-2005 | JP | 4356065 B2 | 04-11-2009 |
| | | | JP | 2005048306 A | 24-02-2005 |
| KR 20120077817 | A | 10-07-2012 | NONE | | |
| JP 2014043490 | A | 13-03-2014 | NONE | | |

Form PCT/ISA/210 (patent family annex) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003147618 A
- JP 2005113349 A
- JP 2007177359 A
- JP 2010150676 A
- JP 2009144267 A
- JP 2615131 B
- JP 61026612 A
- JP H02289516 A